# EUROPEAN PATENT APPLICATION

(11) **EP 4 467 319 A1**
(43) Date of publication of application: **27.11.2024**
(21) Application number: 23174726.2
(22) Date of filing: 23.05.2023
(51) Int. Cl.: B29C 63/02, B29C 63/00, B29C 65/02, B29C 65/48, B29C 65/82, B29C 65/00, F03D 1/06, B29C 63/48, B29C 65/18, B29L 31/08

(54) **FILM APPLICATION METHOD FOR LARGE WIND TURBINE BLADES, AND DEVICE**

(71) Applicant: Siemens Gamesa Renewable Energy A/S, 7330 Brande (DK)
(72) Inventor: Rokohl, Simon Groenlund, 9000 Aalborg (DK)
(74) Representative: SGRE-Association

(57) **Abstract**

Method for applying a film (3) to an outer surface (2) of a wind turbine blade (1) or an inner surface of a casting mold for a wind turbine blade (1), the method comprising:
providing a wind turbine blade (1) or a casting mold for a wind turbine blade (1);
providing a film (3) on a film roll (8);
applying the film (3) from the film roll (8) to the outer surface (2) of the wind turbine blade (1) or to an inner surface of the casting mold for the wind turbine blade (1);
smoothening the applied film (3).

## Description

### Field of invention

The present invention relates to a method for applying a film to large wind turbine blades and to a device for carrying out such method.

Thus, the present invention may relate to the technical field of manufacturing wind turbine blades.

### Art Background

For large wind turbine blades it is critical that the outer surface of the wind turbine blade has a superior finish for guaranteeing a good output. Even minor defects on the outer surface of the wind turbine blade, such as rough patches, uneven parts or dirt, can dramatically decrease the power output of the wind turbine over its whole lifetime.

A possibility for improving the surface quality of a wind turbine blade is to apply special paints or to locally apply thin films.

It is known to manually attach thin films on small airfoil surfaces for locally reproducing natural phenomena and thus improve the aerodynamic properties of the airfoil itself.

However, by the current wind turbine blades, especially for offshore wind turbine parks, a manual application is disadvantageous due to the detachment risk caused by human error as well as due to the vast area that needs to be covered, as such area is often more than 750 m².

### Summary of the invention

There might therefore be the need for improving the application of thin films on the wind turbine blades.

According to a first aspect of the present invention, a method for applying a film to an outer surface of a wind turbine blade or an inner surface of a casting mold for a wind turbine blade is disclosed. The method comprises the following steps: providing a wind turbine blade or a casting mold for a wind turbine blade; providing a film on a film roll; applying the film from the film roll to the outer surface of the wind turbine blade or to an inner surface of the casting mold for the wind turbine blade; smoothening the applied film.

According to a further aspect of the present invention, a device for applying a film to an outer surface of a wind turbine blade or to an inner surface of a casting mold for a wind turbine blade is provided. The device comprises: a base unit; an adjustable arm connected to the base unit; a film roll attached to the adjustable arm, the film roll configured for providing a film; an applying mechanism attached to the adjustable arm, configured for applying the film to an outer surface of a wind turbine blade or to an inner surface of a casting mold for a wind turbine blade; a smoothening roll attached to the adjustable arm, configured for smoothening the film applied to an outer surface of a wind turbine blade or to an inner surface of a casting mold for a wind turbine blade

According to the present invention, the term "film" might refer to a thin film as used in the aerospace and/or wind energy industry for improving the aerodynamic qualities of an airfoil. For example, such film might have a smooth surface or have a structured surface, for the purpose of achieving specific characteristics of the airfoil. As a way of example, the structured surface might have such a structure, which is capable of influencing the airflow in a boundary region near to the wind turbine blade.

According to the present invention, the term "applying the film" might in particular refer to depositing, without pressure or temperature, a leading edge of the film on an outer surface of a wind turbine blade or on an inner surface of a casting mold for a wind turbine blade. The applying step might be manually performed by an operator, but it is preferrable that the application is automatically performed by a device, so that human errors might be minimized.

According to the present invention, it is therefore possible to reliably and efficiently apply a film to an outer surface of a wind turbine blade either by applying it to the outer surface directly or by applying it to an internal surface of a casting mold for a wind turbine blade.

In the first case, the wind turbine blade is already formed, and the film is applied therefore after a production of the wind turbine blade itself, so that the outer surface of the wind turbine blade can be improved by the applied film. Therefore, the application of the film on the finished wind turbine blade according to the present invention represents a readily and easily way for improving the quality of the wind turbine blade, in particular its aerodynamic properties.

In the second case, the film is applied to an internal surface of a casting mold for a wind turbine blade, before the wind turbine blade is manufactured. In such a scenario, therefore, the film is applied during the manufacturing process, so that the presence of impurities and/or intrusions between the film and the outer surface of the blade might be minimized.

### Exemplary embodiments

According to an embodiment, the method further comprises, before the step of applying the film to the outer surface of the wind turbine blade, applying an adhesive and/or adhesion promoter layer to the outer surface of the wind turbine blade. In such a way it is possible to improve the adhesion of the film to the outer surface of the wind turbine blade.

In some embodiments, the adhesive and/or the adhesion promoter layer have a thickness comprised between 20 µm and 300 µm.

According to some embodiments, there is a pressure-sensitive tape without adhesive to promote the application of the film. Accordingly, the method would comprise a step of applying, before the step of applying the film to the outer surface of the wind turbine blade, a pressure-sensitive tape to the outer surface of the wind turbine blade. Pressure-sensitive tapes are used in conjunction with leading-edge protection solutions in the wind turbine industry, for better applying the film to a leading edge of the wind turbine blade.

In particular, it might be provided, that the pressure-sensitive tape is applied together with the film.

Examples for an adhesive layer might be represented by at least one of the following: epoxy, silane-modified polymer or silicone based adhesives. The adhesive could also be a two-component or a one-component adhesive, which is curing upon exposure to moisture, heat or UV-light. Instead of liquid adhesive, solid hotmelt adhesive sheets could also be utilized. Solid hotmelt adhesive sheets can be mounted on the film roll together with the film, in order to facilitate the application of the method.

Examples for an adhesion promoter layer might be represented by silane coupling agents, which are used to bond dissimilar material.

According to an embodiment, the method further comprises, before the step of applying the film to the outer surface of the wind turbine blade, pre-activating the outer surface of the wind turbine blade. By pre-activating the outer surface of the wind turbine blade, it is possible to improve the adhesion of the film to the outer surface of the wind turbine blade.

Examples for pre-activating the outer surface of the wind turbine blade are sanding, heating or heat treating, plasma treating or UV light treating. Thus, methods well-known in the prior art can be easily integrated in the method according to the present invention.

According to an embodiment, the method further comprises applying a pressure to the applied film during the smoothening step, wherein it is preferably provided that the pressure is adjustable.

By applying a pressure to the film during the smoothening step of the same on the outer surface of the wind turbine blade, it is possible to improve the adhesion of the film to the outer surface of the wind turbine blade. On top of that, the application of pressure on the film during the smoothening step provides for an improved form fidelity of the film on the outer surface of the wind turbine blade. Also, by applying a pressure to the film during the smoothening step of the same on the outer surface of the wind turbine blade it is possible to improve the adhesion, in particular if pressure-sensitive tapes are applied on the outer surface of the wind turbine blade prior to the application of the film.

According to an embodiment of the invention, the film can be a pressure-sensitive tape, which is applied directly on the outer surface of the wind turbine blade or on the inner surface of the mold for the wind turbine blade.

By having the possibility to finely tune the pressure in an adjustable manner, the method can provide for increased adhesion of the film on the outer surface of the wind turbine blade, in particular at positions having complex forms. Also, an adjustable pressure allows to calibrate the pressure during the smoothening step in such a way, that the wind turbine blade is not structurally damaged during the application and/or the smoothening of the film on its outer surface.

According to an embodiment, the method further comprises applying a temperature to the applied film during the smoothening step. Therefore, the film can be activated, thus improving the adhesion.

According to an embodiment, the method further comprises measuring the quality of the applied film, in particular the presence of intrusions between the applied film and the outer surface of the wind turbine blade, after the smoothening step.

Therefore, it is possible to readily identify if there are defects in the applied and smoothened film, so that such defects can be promptly dealt with. In particular, the presence of intrusions, being either material intrusions and/or air intrusions between the film and the outer surface of the wind turbine blade, can have a big impact on the aerodynamic propertied of the wind turbine blade itself. Therefore, it is important to be able to identify and deal with such defects.

According to an embodiment, the method may further comprise the step of warning a user if an intrusion and/or an air inclusion is detected between the film and the outer surface of the wind turbine blade. Such warning might be an acoustic and/or a visual warning, which is given to the user by means of, for example, a user interfaces such as a computer, a smartphone, a tablet or another machine.

According to a method, the measuring is performed by means of a sensor, in particular of an optical sensor, more in particular of a camera.

According to an embodiment, the film has a thickness comprised between 20 µm and 800 µm.

According to an embodiment, the method further comprises cutting the film after the step of smoothening the applied film.

According to an embodiment, the film is applied to the outer surface of the wind turbine blade or the inner surface of the casting form for the wind turbine blade in a sequential manner by first applying the film to a first section, cutting the film after the smoothening step on the first section and by performing the method steps according to the first aspect of the invention on a second section, wherein the second section is neighboring the first section.

Therefore, it is possible to easily apply the film to the whole outer surface of the wind turbine blade or the whole inner surface of the casting form for the wind turbine blade by repeating the application of the film section after section.

According to an embodiment, the method is carried out by means of a human-machine-interface, or HMI, which can be operated by a user. In such a way, carrying out the method is particularly efficient, as there are no direct human interactions in the film application process, thus eliminating possible human error sources and speeding up the whole process.

According to an embodiment, the base unit and the adjustable arm might form a forklift or a gantry crane system having one or more adjustable arms for the applying the film.

According to an embodiment, the adjustable arm might comprise a first section, which is adjustable in a perpendicular direction of the base unit, and a second section, which is adjustable in directions being perpendicular to the perpendicular direction of the base unit.

Therefore, an improved positioning system for the application of the film might be provided.

According to an embodiment, the device further comprises a sensor for measuring the quality, in particular the presence of air bubbles or intrusions, in an applied film.

Therefore, it is possible to evaluate the quality of the applied film after the smoothening step.

The sensor might in particular be an optical sensor, more in particular of a camera, which is configured to recognize surface defects on the applied film.

According to an embodiment, the device further comprises a memory for saving a CAD model of an outer surface of a wind turbine blade or of an inner surface of a casting mold for a wind turbine blade.

Therefore, it is possible for the device to save the exact geometry of the surface on which the film needs to be applied.

According to an embodiment, the device also comprises a computing unit, which is configured to calculate a course for the application of the film on the outer surface of the wind turbine blade or on the inner surface of the casting unit for the wind turbine blade. In such a way, it is possible to improve the quality of the film application process.

According to an embodiment, the device comprises a sensor for measuring the surface on which the film needs to be applied, wherein a computing device calculates the curvature of the surface measured by the sensor and stops the process if the curvature exceeds a threshold value.

According to an embodiment, it is also possible that the film is applied and smoothened up to a point in which the curvature exceeds the threshold value and that the film is then cut and that the method steps are repeated to a neighboring section of the surface, where the curvature is below the threshold value.

According to an embodiment, the device further comprises a cutting device for cutting the film.

In the present application all of the method steps can be performed by the device, so that all method features can be used for clarifying and limiting the scope of the apparatus claim and the apparatus features can be used for clarifying and limiting the scope of the method claim.

### Brief Description of the Drawing

- Figure 1: shows a schematic diagram representing an embodiment of the method according to an embodiment of the present invention.
- Figure 2: shows a device for carrying out the method according to an embodiment of the present invention.
- Figure 3: shows a device according to Figure 2 carrying the method according to Figure 1 in a sequential manner on a plurality of sections of a wind turbine blade.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

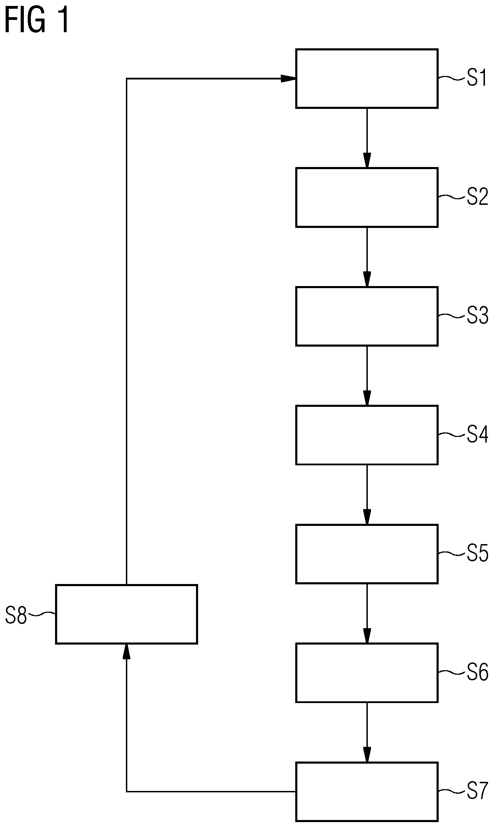

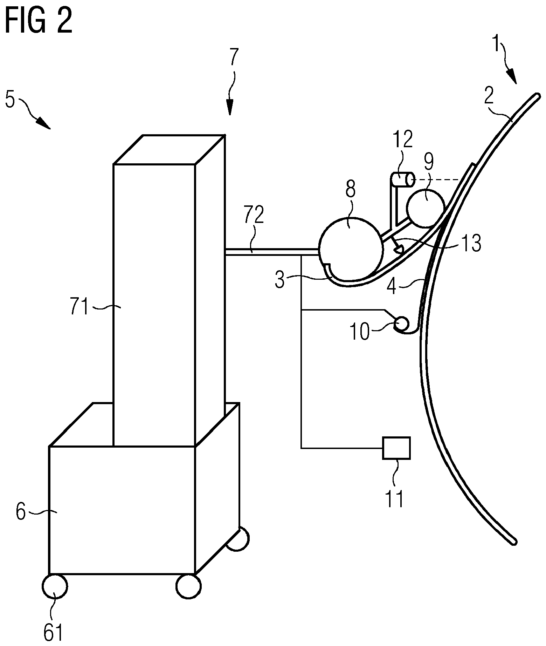

**Figure 1** represents a schematic diagram of a representative embodiment of a method according to the present invention. During the description of **Figure 1****,** reference shall be taken to the device according to **Figure 2** and vice versa.

The method shown in **Figure 1** is used for applying a film 3 to an outer surface 2 of a wind turbine blade 1.

The invention also comprises the case that the film 3 is applied to an inner surface of a casting form for the wind turbine blade 1. In such a case, the surface 2 is not an outer surface of a wind turbine blade, but rather the inner surface of the casting form for the wind turbine blade 1.

The method comprises a first step S1 of providing the wind turbine blade 1 or the casting mold for the wind turbine blade.

In a second step S2, a film roll containing the film 3 is provided. The film 3 might be a film having a particular surface structure, which is preferably directed towards improving the aerodynamic properties of the wind turbine blade 1 and thus increase the energy power output and prolong the life span of the wind turbine blade 1.

The film 3 might have a thickness comprised preferably between 20 µm and 800 µm.

In a further step S3, the outer surface 2 of the wind turbine blade 1 is layered with an adhesive and/or with an adhesion promoter layer 4. Such adhesive and/or adhesion promoter layer 4 might have a thickness comprised between 20 µm and 300 µm.

Also in the step S3, the outer surface 2 of the wind turbine blade 1 might be pre-activated in such a way that adhesion between the film 2 and the outer surface 2 is improved.

Such pre-activation of the outer surface 2 might be done by different means. For example, the pre-activation might consist in sanding the outer surface 2. Other methods for pre-activating the outer surface 2 might also consist in heat treating, plasma treating, UV light treating.

The above-described method for the surface application can also be applied to the applied film.

In a further step S4, the method calculates the surface 2 on which the film 3 must be applied and smoothened, in order to identify possible critical sections through surface parameters. For example, if the surface exceeds a certain threshold value, the method can stop and resume at another point, at which the curvature of the surface does not exceed the threshold value.

In a further step S5, the film 3 is applied to the outer surface 2. By applying the film 3 on the outer surface 2, the film 2 is therefore deposited, without the use of pressure or of temperature, on the outer surface 2 of the wind turbine 1.

In a further step S6, the film 3 as applied on the outer surface 2 of the wind turbine 1 is smoothened, so that it adheres to the outer surface 2 of the wind turbine 1.

During the smoothening step, a pressure and/or a temperature might be applied to the film 3, so that the adhesion of the film 3 to the outer surface 2 of the wind turbine blade 1 is improved.

In a further step S7, the quality of the film 3 is controlled by means of a sensor, in particular an optical sensor, more in particular a camera.

If the sensor identifies any defects in the applied and smoothened film 3, then it activates a warning system for warning a user that a defect in the applied and smoothened film 3 has been detected, so that the user can take the appropriate countermeasures. In such a way, inclusions, intrusions and/or air bubbles between the film 3 and the outer surface 2 of the wind turbine blade 1 might be removed and the quality of the wind turbine blade 1, in particular the quality related to its aerodynamic properties, can be improved.

**Figure 2** shows an exemplary device 5 for applying the film 3 to the outer surface 2 of the wind turbine blade 1. As in the case for **Figure 1****,** the device 5 can also apply the film 3 to an inner surface of a casting form for the wind turbine blade 1.

The device 5 comprises a base unit 6. The base unit 6 might be for example a forklift or a gantry system, such as the one known in the prior art in the manufacturing of wind turbine blades. In the base unit 6 there might be a control unit (not shown) for controlling the device 5, in which a surface model, for example a CAD model, of the surface 2 on which the film has to be applied and smoothened is provided. Accordingly, it is possible to apply and smoothen the film 3 by setting the correct parameters for the process and it is also possible to warn a user of the device 5 if the curvature of the surface exceeds a certain threshold value, so that the application and the smoothening of the film 3 is not possible.

The base 6 comprises wheels 61 for moving the device 5 during the process. The wheels 61 might be substituted by a track-system that allows the device 5 to be moved on a workshop floor.

The device 5 further comprises an adjustable arm 7, which is preferably provided as a robotic arm. The adjustable arm 7 comprises a first part 71 that allows a movement in a perpendicular direction with respect to the base 6 and a second part 72, which allows a movement being perpendicular to the perpendicular direction with respect to the base 6.

Attached to the adjustable arm 7 there is a film roll 8, on which the film 3 is provided.

A smoothening roll 9 is also attached to the adjustable arm 7. The smoothening roll 9 according to the present embodiment is configured to both apply and to smoothen the film 3 on the outer surface 2 of the wind turbine blade 1. To this end, the smoothening roll 9 can apply a variable pressure on the film 3 during the application and the smoothening, wherein the pressure is controlled by a control unit (not shown) placed in the base unit. In particular, the pressure can be changed if adaptations are needed for different blade types and/geometries in different areas.

Also, the smoothening roll 9 can have a heat unit (not shown) configured for heating the film 3 during application and smoothening. In particular, the roll 9 can be used for smoothening the film 3 if such film 3 contains a pressure-sensitive tape.

The device furthermore comprises an activation device 11, which is configured for activating the outer surface 2 of the wind turbine blade 1 prior to the application of the film 3.

The activation device 11 might be, for example, a sanding unit, a UV-light treatment unit, a heat treatment unit or a plasma treatment unit.

Also, an adhesive and/or adhesion promoter layer unit 10 for applying the adhesive and/or an adhesion promoter layer 4 to the outer surface 2 of the wind turbine blade 1 prior to the application of the film 3.

Also, the device 5 comprises a sensor unit 12 for measuring the quality of the film 3, once the film 3 has been applied and smoothened on the outer surface 2 of the wind turbine 1.

The senor unit 12 is preferably an optical sensor and more preferably a camera.

If the sensor unit 12 detects any defects, it can report them to a control unit (not shown) placed inside the base unit 6, so that a user might take the necessary actions for correcting the defects.

Also, a cutting device 13 is attached to the adjustable arm 7. The cutting device 13 is configured to cut the film roll after the procedure of applying and smoothening the film 3 is ended.

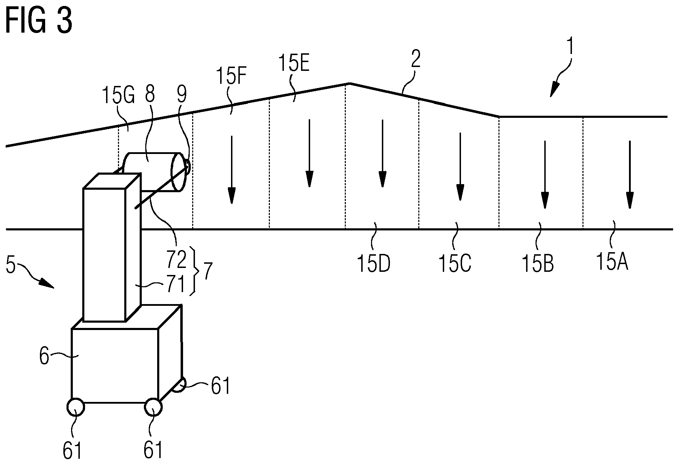

**Figure 3** shows how a device 5 according to **Figure 2** performs the method according to **Figure 1** on different, adjacent sections.

In **Figure 3** different sections 15A, 15B ... 15G of the outer surface 2 of the wind turbine blade 1 are shown. As schematically represented, the device 1 first applies and smoothens the film 3 to the section 15A. Once the section 15A has been provided with the film 3, the device 5 cuts the film 3 with the cutting device 13 in a step S8.

The device 5 is moved then along a direction 14 to the next section 15B, where the method according to **Figure 1** is repeated. After section 15B, section 15C is processed in the same way and the process is repeated until all of the sections of the outer surface 2 of the wind turbine blade 1 are provided with the film 3.

In such a way, the application and the smoothening of the film on the whole outer surface 2 of the wind turbine blade 1 in an easy and reliable manner.

Independent of the grammatical term usage, individuals with male, female or other gender identities are included within the term.

## Claims

1. Method for applying a film (3) to an outer surface (2) of a wind turbine blade (1) or an inner surface of a casting mold for a wind turbine blade (1), the method comprising:
providing a wind turbine blade (1) or a casting mold for a wind turbine blade (1);
providing a film (3) on a film roll (8);
applying the film (3) from the film roll (8) to the outer surface (2) of the wind turbine blade (1) or to an inner surface of the casting mold for the wind turbine blade (1);
smoothening the applied film (3).

2. Method according to claim 1, wherein the method further comprises, before the step of applying the film (3) to the outer surface (2) of the wind turbine blade (1):
applying an adhesive and/or adhesion promoter layer (4) to the outer surface (2) of the wind turbine blade (1).

3. Method according to claim 2, wherein the adhesive and/or adhesion promoter layer (4) has a thickness comprised between 20 µm and 300 µm.

4. Method according to any of claims 1 to 3, wherein the method further comprises, before the step of applying the film (3) to the outer surface (2) of the wind turbine blade (1) :
pre-activating the outer surface (2) of the wind turbine blade (1).

5. Method according to claim 4, wherein the pre-activating step is performed by at least one of the following means:
sanding, heat treating, plasma treating, UV light treating.

6. Method according to any of claims 1 to 5, wherein the method further comprises:
applying a pressure to the applied film (3) during the smoothening step, wherein it is preferably provided that the pressure is adjustable.

7. Method according to any of claims 1 to 6, wherein the method further comprises:
applying a temperature to the applied film (3) during the smoothening step.

8. Method according to any of claims 1 to 7, wherein the method further comprises:
measuring the quality of the applied film (3), in particular the presence of intrusions between the applied film (3) and the outer surface of the wind turbine blade (2), after the smoothening step.

9. Method according to claim 8, wherein the measuring is performed by means of a sensor (12), in particular of an optical sensor, more in particular of a camera.

10. Method according to any of claims 1 to 9, wherein the film (3) has a thickness comprised between 20 µm and 800 µm.

11. Method according to any of claims 1 to 10, wherein the method further comprises cutting the film (3) after the step of smoothening the applied film (3).

12. Device (5) for applying a film to an outer surface (2) of a wind turbine blade (1) or to an inner surface of a casting mold for a wind turbine blade (1), the device (5) comprising:
a base unit (6);
an adjustable arm (7) connected to the base unit (6);
a film roll (8) attached to the adjustable arm (7), the film roll (8) configured for providing a film (3);
an applying mechanism attached to the adjustable arm (7), configured for applying the film (3) to an outer surface (2) of a wind turbine blade (1) or to an inner surface of a casting mold for a wind turbine blade (1);
a smoothening roll (9) attached to the adjustable arm (7), configured for smoothening the film (3) applied to an outer surface (2) of a wind turbine blade (1) or to an inner surface of a casting mold for a wind turbine blade (1).

13. Device (5) according to claim 12, the device (5) further comprising a sensor (12) for measuring the quality, in particular the presence of air bubbles or intrusions, in an applied and smoothened film (3).

14. Device (5) according to claim 12 or 13, wherein the device (5) further comprises a memory for saving a CAD model of an outer surface (2) of a wind turbine blade (1) or of an inner surface of a casting mold for a wind turbine blade (1).

15. Device (5) according to any of claims 12 to 14, wherein the device (5) further comprises a cutting device (13) for cutting the film (3).
